# EUROPEAN PATENT SPECIFICATION

(11) **EP 3 065 200 B1**
(45) Date of publication and mention of the grant of the patent: **04.04.2018**
(21) Application number: 16155570.1
(22) Date of filing: 12.02.2016
(51) Int. Cl.: H01M 2/10, A47L 9/28, H01M 10/6562, H01M 10/6557, H01M 10/613, H01M 10/42, H01M 10/62, H01M 10/643

(54) **VACUUM CLEANER AND BATTERY ASSEMBLY AND CHARGING STAND**
STAUBSAUGER UND BATTERIEANORDNUNG UND LADESTÄNDER
ASPIRATEUR ET ENSEMBLE BATTERIE ET SOCLE DE CHARGE

(30) Priority: 13.02.2015 KR 20150022168
(43) Date of publication of application: 07.09.2016
(73) Proprietor: LG Electronics Inc., Seoul 07336 (KR)
(72) Inventor: HAN, Seonghoon, 08592 Seoul (KR); RYU, Jungwan, 08592 Seoul (KR); KIM, Seongwoo, 08592 Seoul (KR)
(74) Representative: Morrall, Jonathan Ian McLachlan

(56) References cited:
- EP-A1- 2 398 108
- EP-A2- 0 813 265
- EP-A2- 1 498 999
- DE-A1- 10 352 046
- JP-A- 2012 252 959
- KR-A- 20140 077 811
- US-A1- 2013 288 096

## Description

### BACKGROUND

### 1. Field

A vacuum cleaner, a battery assembly and a charging stand are disclosed herein.

### 2. Background

Generally, a vacuum cleaner is an apparatus which suctions air containing dust using a suction force generated by a suction motor installed inside a main body, and filters the dust in the main body.

The vacuum cleaner is classified into a manual cleaner and an automatic cleaner. The manual cleaner is a cleaner with which a user directly performs a cleaning operation, and the automatic leaner is a cleaner which performs the cleaning operation while traveling by oneself.

The manual cleaner may be classified into a canister type in which a suction nozzle is provided separately from a main body and connected with the main body through a connection tube, and an upright type in which the suction nozzle is coupled to the main body.

In Korean Patent Publication No.10-2006-0118796 (published on November 24, 2006) which is a prior art document, there is disclosed a power cord withdrawing port of a cleaner.

In the prior art document, a cord reel assembly is provided inside a main body, and the main body may receive power by connecting a power cord to an electrical outlet.

In the case of the prior art document, since the cleaner receives the power through the cord reel assembly, the cleaner may move by only a length of the cord wound on the cord reel assembly when a cleaning operation is performed using the cleaner, and the cleaning operation is restricted.

DE 103 52 046 A1 discloses a battery having at least one cylindrical electrochemical storage cell with a housing through which a cooling medium, especially a liquid, flows. At least approximately the largest part of a cylindrical outer surface of the cell(s) is enclosed by a holding element with a closed outer surface arranged in the housing. The holding element has an elastic region extending in the longitudinal direction over at least part of the height of the cylindrical outer surface that enables elastic expansion of the holding element so that the diameter of the holding element increases.

EP 2 398 108 A1 discloses a battery module including a plurality of columnar cells, and a holder for holding the cells. The holder includes cylindrical container portions for containing the cells, respectively, refrigerant passages and phase change elements for adjusting temperature of the cells, and pressing walls for pressing the cells to bring outer circumferential surfaces of the cells into contact with inner circumferential surfaces of the container portions, respectively. The holder is made of an aluminum alloy.

EP 1 498 999 A2 discloses a rechargeable vacuum cleaner system including a vacuum cleaner having a body case, a storage chamber provided in said body case, the storage chamber having an opening, a battery assembly housed in the storage chamber through the opening, a heat transfer wall configured to constitute a portion of the storage chamber, a temperature-detecting element for detecting a temperature of the battery assembly, a charger to charge the battery assembly and including a charging stage, and a charge-controlling part provided in the charging stage to control charge of the battery assembly, a resilient member being provided in the storage chamber to thermally couple the battery assembly with the heat transfer wall, the charger including a heat transmission part which constitutes a portion of the charging stage and which has a heat transmitting surface, the heat transfer wall of the storage chamber being thermally connected to the heat transmission surface of the heat transmission part of the charger.

### SUMMARY

The present disclosure is directed to a vacuum cleaner which is able to be easily moved.

Also, the present disclosure is directed to a vacuum cleaner in which heat emission performance of a battery assembly for supplying electric power is enhanced, and a reduction in a life span of the battery is prevented, and the battery assembly.

Also, the present disclosure is directed to a charging stand which is able to charge up a battery assembly.

The claimed invention relates to a battery assembly and is defined in the appended independent claim.

There is provided a battery assembly including a plurality of battery cells; and a battery cover configured to support the plurality of battery cells, wherein the battery cover includes a plurality
of partition walls, and each of the plurality of partition walls forms cell chambers which accommodate the plurality of battery cells, respectively, and a part or all of the plurality of partition walls are spaced apart from each other

The plurality of partition walls enable the plurality of battery cells to be arranged in a plurality of rows.

The plurality of partition walls comprises a plurality of first partition walls which accommodates the battery cells in a first row, and a plurality of second partition walls which accommodates the battery cells in a second row.

One or more of the plurality of first partition walls are spaced apart from one or more of the plurality of second partition walls to form a first air chamber between the plurality of first partition walls and the plurality of second partition walls.

At least a part of each of the plurality of first partition walls may be spaced apart from each other to form a second air chamber, or at least a part of each of the plurality of second partition walls may be spaced apart from each other to form the second air chamber, or at least a part of each of the plurality of first partition walls and at least a part of each of the plurality of second partition walls may be spaced apart from each other to form the second air chamber.

The battery cover comprises a plurality of first heat radiation holes which discharge heat of each of the cell chambers, and one or more second heat radiation holes which discharge heat of the first air chamber.

The battery assembly may further comprise a conductor which electrically connects between the battery cells arranged in the same row among the plurality of rows, and a conductor which electrically connects between two battery cells in two adjacent rows among the plurality of rows.

The battery assembly may further comprise a conductor which connects the plurality of battery cells, and a cell cap which covers one or more of both poles of
each of the plurality of battery cells, wherein the conductor is in contact with one or more poles of the battery cells passed through the cell cap.

The battery assembly may further comprises a conductor which connects the plurality of battery cells, and a cell cap which covers one or more of both poles of each of the plurality of battery cells, wherein the conductor is in contact with one or more poles of the battery cells while being inserted into the cell cap.

The battery assembly may further comprise a battery management unit which manages a voltage of each of the plurality of battery cells, and an outer case which accommodates the battery management unit and the battery cover.

The outer case may comprise a partition plate which divides a first space accommodating the battery cover from a second space accommodating the battery management unit.

At least a part of an internal surface of the outer case and the battery cover may be spaced apart from each other to form a heat radiation path between the internal surface of the outer case and the battery cover.

The outer case may comprise a heat radiation hole which discharges internal heat of the outer case to an outside.

The outer case may further comprise an opening and closing member which opens and closes the heat radiation hole, and an elastic member which provides an elastic force to the opening and closing member in a direction that the opening and closing member closes the heat radiation hole.

There is also provided a charging stand including a charging stand body having a terminal which is connected with a terminal of a battery assembly; a pressing part provided at the charging stand body, and configured to press an opening and closing member which opens and closes a heat radiation hole of the battery assembly; and a heat radiation opening provided at the charging stand body, and configured to be in communication with the heat radiation hole of the battery assembly.

The details of one or more embodiments are set forth in the accompanying drawings and the description below. Other features will be apparent from the description and drawings, and from the claims.

### BRIEF DESCRIPTION OF THE DRAWINGS

Embodiments will be described in detail with reference to the following drawings in which like reference numerals refer to like elements, and wherein:
FIG. 1 is a perspective view of a vacuum cleaner according to a first embodiment;
FIG. 2 is an exploded perspective view of a cleaner body of the vacuum cleaner according to the first embodiment;
FIG. 3 is a block diagram illustrating a configuration of the vacuum cleaner according to the first embodiment;
FIG. 4 is an exploded perspective view of a battery assembly according to the first embodiment;
FIG. 5 is a plan view illustrating a state in which a battery cell is accommodated in a battery cover;
FIG. 6 is a cross-sectional view taken along line A-A of FIG. 5;
FIG. 7 is a view illustrating a connection method and an arrangement of a battery cell according to a second embodiment;
FIG. 8 is a view illustrating a cell cap which covers both ends of a battery cell according to a third embodiment;
FIG. 9 is a view illustrating a cell cap which covers both ends of a battery cell according to a fourth embodiment;
FIG. 10 is a view illustrating a part of an outer case of a battery assembly according to a fifth embodiment;
FIG. 11 is a block diagram of a vacuum cleaner according to a sixth embodiment;
FIG. 12 is a view illustrating a charging stand for charging a battery assembly according to the sixth embodiment; and
FIG. 13 is a view illustrating a state in which the battery assembly is connected to the charging stand of FIG. 12.

### DETAILED DESCRIPTION

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustrating specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope of the appended claims. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

Also, each of embodiments described in the specification, and other embodiments derived by a combination of two or more embodiments are included in the scope of the appended claims.

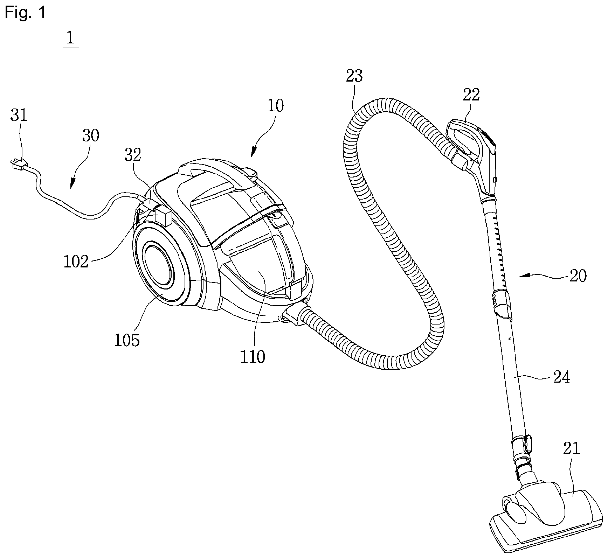

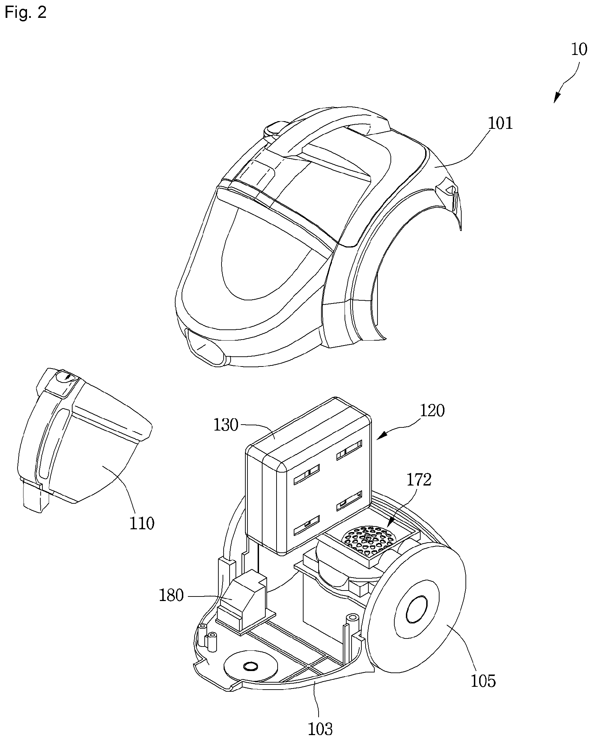

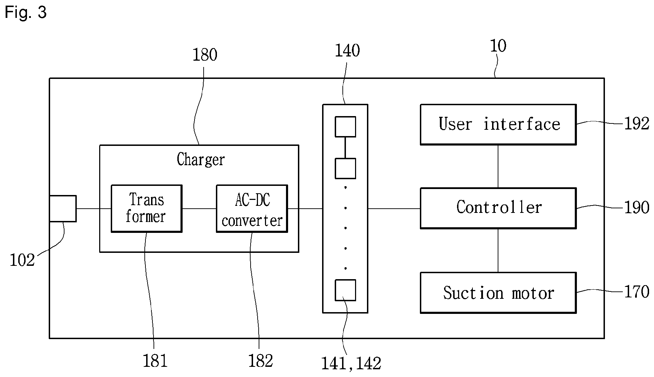

FIG. 1 is a perspective view of a vacuum cleaner according to a first embodiment, FIG. 2 is an exploded perspective view of a cleaner body of the vacuum cleaner according to the first embodiment, and FIG. 3 is a block diagram illustrating a configuration of the vacuum cleaner according to the first embodiment.

Referring to FIGS. 1 to 3, a vacuum cleaner 1 according to the embodiment may include a cleaner body 10 having a suction motor 170 for generating a suction force, and a suction unit 20 which guides air containing dust to the cleaner body 10.

The suction unit 20 may include a suction part 21 which suctions the dust on a surface to be cleaned, e.g., a floor surface, and connection parts 22, 23 and 24 which connects the suction part 21 to the cleaner body 10.

The connection parts 22, 23 and 24 may include an extension tube 24 which is connected to the suction part 21, a handle 22 which is connected to the extension tube 24, and a suction hose 23 which connects the handle 22 to the cleaner body 10.

The vacuum cleaner 1 may further include a dust separator (not shown) which separates the air and the dust suctioned through the suction unit 20 from each other, and a dust container 110 which stores the dust separated in the dust separator. The dust container 110 may be separably installed at the cleaner body 10. The dust separator may be manufactured separately from the dust container 110, or may form one module with the dust container 110.

The vacuum cleaner 1 may further include a battery assembly 120 which supplies power to the suction motor 170. In the specification, the battery assembly 120 may also supply the power to another element other than the suction motor 170. Therefore, in the specification, a member which is operated by receiving the power from the battery assembly 120 may be referred to as an energy consumption part.

The battery assembly 120 may be installed at the cleaner body 10.

The vacuum cleaner 1 may further include a charger 180 which charges up the battery assembly 120, and a charging connector 30 which is separably connected to the cleaner body 10 and supplies commercial power to the cleaner body 10.

The charging connector 30 may include a plug 31 which is connected to an electrical outlet, and a first connector 32 which is connected to the cleaner body 10. And the cleaner body 10 may include a second connector 102 to which the first connector 32 is connected.

The cleaner body 10 may include a first body 101, and a second body 103 which is coupled to a lower side of the first body 101. A wheel 105 may be coupled to each of both sides of the second body 103.

The suction motor 170, the battery assembly 120 and the charger 180 may be installed at the second body 103. The suction motor 170 may be protected by a motor housing 172. That is, the suction motor 170 may be accommodated in the motor housing 172.

For space efficiency, the battery assembly 120 may be located at a lateral side of the suction motor 170, i.e., a lateral side of the suction motor 170.

For example, the suction motor 170 and the battery assembly 120 may be located between a plurality of wheels 105. And the battery assembly 120 may be located between one of the plurality of wheels 105 and the suction motor 170. The charger 180 may be disposed at a position which is spaced apart from the battery assembly 120.

When the battery assembly 120 is disposed between the wheel 105 and the suction motor 170, the battery assembly 120 may be disposed to be spaced apart from the suction motor 170. That is, a space for cooling may be formed between the battery assembly 120 and the suction motor 170.

As another example, the battery assembly 120 may be located at a front of the suction motor 170. Even in this case, the battery assembly 120 may be disposed to be spaced apart from the suction motor 170.

As still another example, the second connector 102 may be provided at the suction part 21. Alternatively, the battery assembly 120 may be provided at the handle 22 or the suction part 21.

The dust container 110 may be separably coupled to the first body 101. And the second connector 102 may be provided at the first body 101.

The battery assembly 120 may include a plurality of battery cells 141 and 142. The plurality of battery cells 141 and 142 may be secondary cells which are chargeable and dischargeable.

The charger 180 may perform a rectifying and smoothing operation, and thus may convert a received commercial AC voltage into a DC voltage. And the charger 180 supplies the converted DC voltage to the battery assembly 120. For example, the charger 180 may convert the commercial AC voltage into the DC voltage, and may supply the DC voltage to the battery assembly 120.

The charger 180 may include a transformer 181 which transforms an input AC voltage, and an AC-DC converter 182 which converts the AC voltage output from the transformer 181 into the DC voltage. As another example, the DC voltage output from the AC-DC converter 182 may be transformed by the transformer.

In the embodiment, since the AC-DC converter may use a well-known configuration, detailed description thereof will be omitted. Also, a configuration of the charger 180 is not limited.

In the embodiment, for example, the suction motor 170 may be a BLDC motor.

When the battery assembly 120 is charged, the charging connector 30 may be connected to the vacuum cleaner 1, and when a cleaning operation is performed using the vacuum cleaner 1, the charging connector 30 may be separated from the vacuum cleaner 1, and thus a movement freedom degree of the vacuum cleaner 1 may be enhanced.

That is, since the vacuum cleaner 1 receives the power from the battery assembly 120 without a cord reel, a moving distance of the vacuum cleaner 1 is not limited, and also since it is not necessary to move over a cord wound on the cord reel or to arrange the cord while the vacuum cleaner 1 is moved, the vacuum cleaner 1 may be smoothly moved.

Meanwhile, the vacuum cleaner 1 may further include a controller 190 and a user interface 192. The user interface 192 may receive an operation command of the vacuum cleaner 1, and may also display operation information or state information of the vacuum cleaner 1.

The controller 190 may control the energy consumption part based on the input operation command.

The user interface 192 may be provided at one or more of the handle 22 and the cleaner body 10. The user interface 192 has a structure in which an input part and a display part are integrally formed, but may also have a structure in which the input part and the display part are separately formed.

A selection of power-on, a cleaning mode, a degree of an intensity of the suction force or the like in the vacuum cleaner 1 may be selected through the input part. The display part may display at least residual information of the battery assembly 120.

When a battery residual value of the battery assembly 120 reaches a reference value, the controller 190 may enable the display part to display information notifying that charging of the battery assembly 120 is required.

As another example, the display part may indicate the battery residual value of the battery assembly 120 continuously or by stages. For example, the display part may indicate the battery residual value of the battery assembly 120 in the form of a number or character or a graph. Alternatively, the display part may include a plurality of light emitting parts, and may indicate the battery residual value of the battery assembly 120 by changing the number of light emitting parts which are turned on. Alternatively, the display part may indicate the battery residual value of the battery assembly 120 by changing a color of light emitted from the light emitting part.

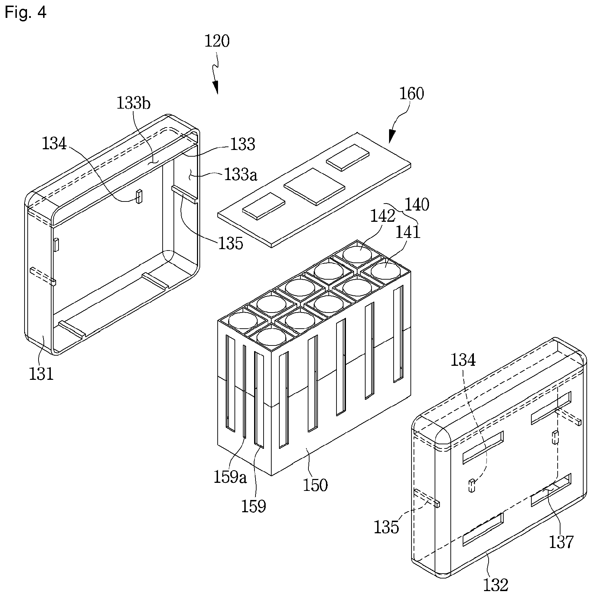

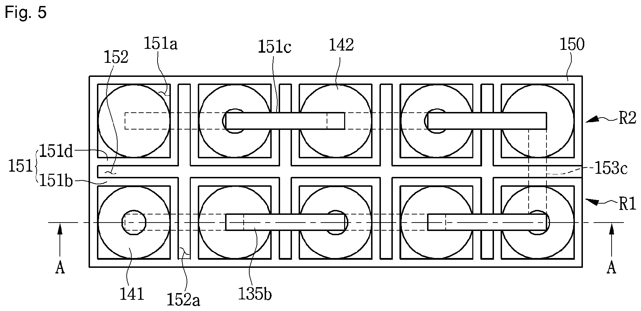

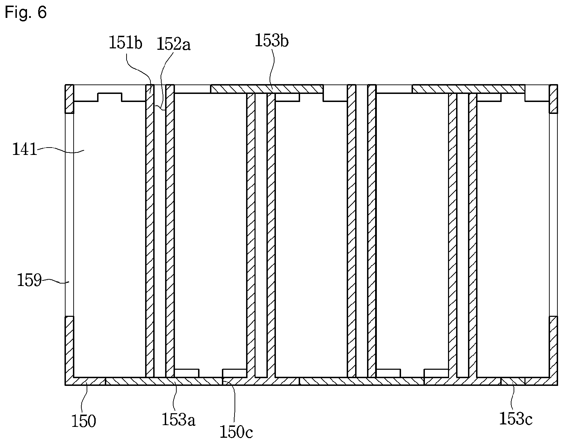

FIG. 4 is an exploded perspective view of the battery assembly according to the first embodiment, FIG. 5 is a plan view illustrating a state in which the battery cell is accommodated in a battery cover, and FIG. 6 is a cross-sectional view taken along line A-A of FIG. 5.

Referring to FIGS. 2 and 4 to 6, the battery assembly 120 according to the embodiment may include the plurality of battery cells 141 and 142, and a battery cover 150 which covers the plurality of battery cells 141 and 142.

The battery cover 150 may support the plurality of battery cells 141 and 142. Also, the battery cover 150 may accommodate the plurality of battery cells 141 and 142.

The battery cover 150 may include a plurality of partition walls 151 which form a plurality of cell chambers 151a for independently accommodating the plurality of battery cells 141 and 142.

For example, each of the plurality of partition walls 151 may form the cell chamber 151a including a plurality of walls. FIG. 4 illustrates an example in which four walls form one cell chamber 151a. However, in the specification, the number of walls forming the cell chamber 151a is not limited. Therefore, a shape of the cell chamber 151a is not limited, either.

As described above, when the plurality of walls serve as one partition wall 151, and form the cell chamber 151a, two adjacent partition walls 151 may be connected to each other through a connection wall.

As another example, the battery cover 150 may have one outer wall, and the plurality of partition walls 151 may divide a space formed by the outer wall into the plurality of cell chambers 151a. In this case, it may be understood that the plurality of partition walls 151 are spaced apart from each other.

The plurality of partition walls 151 may be disposed at the battery cover 150 so that the plurality of battery cells 141 and 142 are arranged in a plurality of rows. The plurality of battery cells 141 and 142 may be spaced apart from each other by the plurality of partition walls 151.

In FIG. 5, R1 indicates the battery cells in a first row, and R2 indicates the battery cells in a second row.

FIG. 5 illustrates an example in which the plurality of battery cells are arranged in two rows. However, in the embodiment, an arrangement of the plurality of battery cells is not limited.

Therefore, the plurality of battery cells 141 and 142 may include the battery cells 141 in the first row, and the battery cells 142 in the second row.

One or more of the plurality of first partition walls 151b in the first row and one or more of the plurality of second partition walls 151d in the second row facing the first row may be spaced apart from each other.

Therefore, a first air chamber 152 for existence of air may be formed between the first partition walls 151b in the first row and the second partition walls 151d in the second row.

Also, at least a part of the plurality of partition walls 151b and 151d which cover the battery cells in each row may be spaced apart from each other. That is, a second air chamber 152a for existence of air may be located between the plurality of first partition walls 151b and between the plurality of second partition walls 151d.

By such an arrangement of the first partition walls 151b and the second partition walls 151d in the embodiment, the battery cells 141 in the first row and the battery cells 142 in the second row may be prevented from being affected by heat generated from each of the battery cells 141 in the first row and the battery cells 142 in the second row.

Also, the battery cells in the same row may also be prevented from being affected by heat generated from each of the battery cells.

The battery cover 150 may further include a plurality of first heat radiation holes 159 which discharges the heat of the plurality of cell chambers 151a to an outside, and one or more second heat radiation holes 159a which discharges the heat of the first and second air chambers 152 and 152a.

The battery assembly 120 may further include a plurality of conductors 153a, 153b and 153c which connect the plurality of battery cells 141 and 142 in series.

The plurality of conductors 153a, 153b and 153c may connect a positive pole of one battery cell with a negative pole of another battery cell.

The plurality of conductors 153a, 153b and 153c may include a first conductor 153a which connects two battery cells in the same row at lower sides of the two battery cells, and a second conductor 153b which connects two battery cells in the same row at upper sides of the two battery cells.

For example, the first conductor 153a may be coupled to a lower side of the battery cover 150. In order for the first conductor 153a to be coupled to the lower side of the battery cover 150, a hole 150c may be formed at a lower side of the battery cover 150.

The second conductor 153b may be coupled to two adjacent partition walls 151b and 151d. Therefore, the two partition walls 151b and 151d to which the second conductor 153b is coupled may include a coupling groove 151c.

Referring to FIGS. 5 and 6, among the plurality of battery cells in the first row, first and second battery cells from the left are connected by the first conductor 153a, and second and third battery cells are connected by the second conductor 153b. Also, third and fourth battery cells may be connected by the first conductor 153a.

The plurality of conductors 153a, 153b and 153c may further include a third conductor 153c which connects the battery cell 141 in the first row with the battery cell 142 in the second row. The third conductor 153c may be coupled to the battery cover 150 or the partition walls 151b and 151d according to an arrangement of the positive pole or the negative pole of the battery cell.

The battery cells in the first row may be connected in series, and the last battery cell in the first row may be connected to the first battery cell in the second row in series, and the battery cells in the second row may be connected in series.

In the case of FIG. 5, among the battery cells in each row, two adjacent battery cells may be arranged so that a direction of a first pole (e.g., the positive pole) of one cell is opposite to a direction of a first pole (e.g., the positive pole) of another cell.

Also, a direction of a first pole (e.g., the positive pole) of the battery cell in the first row may be opposite to a direction of a first pole (e.g., the positive pole) of the battery cell in the second row.

The battery assembly 120 may further include a battery management unit (BMU) 160. The BMU 160 may manage the plurality of battery cells 141 and 142 to be maintained in a constant voltage. That is, the BMU 160 manages the plurality of battery cells 141 and 142 to discharge the constant voltage.

Also, the BMU 160 may include a protection circuit which protects the plurality of battery cells from overheating, an overvoltage or an overcurrent of the battery cells. In the embodiment, since the protection circuit may be realized by a well-known technique, description thereof will be omitted.

The BMU 160 may be electrically connected to each of the plurality of conductors 153a, 153b and 153c.

The battery cover 150 in which the plurality of battery cells 141 and 142 are accommodated, and the BMU 160 may be separately installed at the cleaner body 10. However, the battery cover 150 in which the plurality of battery cells 141 and 142 are accommodated, and the BMU 160 may be disposed in the cleaner body 10 to be spaced apart from each other.

In the specification, the plurality of battery cells 141 and 142 and the battery cover 150 may be commonly referred to as a battery unit.

As another example, the battery assembly 120 may further include an outer case 130 which protects the battery cover 150 and the BMU 160.

The outer case 130 may include a first case 131 and a second case 132 which is coupled to the first case 131.

The outer case 130 may further include a partition plate 133. The partition plate 133 may divide an internal space of the outer case 130 into a first space 133a and a second space 133b.

The first space 133a may accommodate the battery cover 150, and the second space 133b may accommodate the BMU 160.

According to the embodiment, since the first space 133a in which the battery cover 150 is accommodated is divided from the second space 133b in which the BMU 160 is accommodated by the partition plate 133, it may be minimized that the heat of the plurality of battery cells 141 and 142 is transferred to the BMU 160.

The BMU 160 may be installed at the partition plate 133, or may be installed at the outer case 130 which is spaced apart from the partition plate 133.

The outer case 130 may further include a plurality of ribs 134 and 135 which prevents movement of the battery cover 150 while the battery cover 150 is accommodated in the first space 133a. As another example, the plurality of ribs 134 and 135 may be provided at the battery cover 150.

The battery cover 150 may be spaced apart from at least a part of an inner surface of the outer case 130 by the plurality of ribs 134 and 135. For example, the battery cover 150 may be spaced apart from one or more of a bottom surface and a perimeter wall of the outer case 130. Also, the battery cover 150 may be spaced apart from the partition plate 133.

Like the embodiment, when the battery cover 150 is spaced apart from one or more of the bottom surface and the perimeter wall of the outer case 130, a heat radiation path may be formed between the battery cover 150 and the outer case 130. And the outer case 130 may further include one or more heat radiation holes 137.

Since the battery cover 150 is spaced apart from one or more of the bottom surface and the perimeter wall of the outer case 130, it may be minimized that the heat generated from the plurality of battery cells 141 and 142 is conducted to the outer case 130, and thus the heat may be rapidly discharged through the heat radiation holes 137.

Therefore, according to the embodiment, even when a user grasps the outer case 130 of the battery assembly 120 to replace or check the battery assembly 120 just after the vacuum cleaner 1 is used, i.e., after the plurality of battery cells 141 and 142 are discharged, the user may be prevented from being hurt due to a high temperature.

Also, due to the outer case 130, the battery cells 141 and 142 may be prevented from being damaged by an external shock.

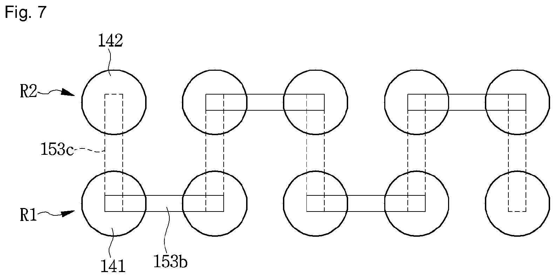

FIG. 7 is a view illustrating a connection method and an arrangement of the battery cell according to a second embodiment.

The embodiment is the same as the first embodiment, except a connection method of the battery cell through the conductor. Therefore, hereinafter, only characteristic parts of the embodiment will be described.

Referring to FIG. 7, the battery cells in the first row and the battery cells in the second row of the embodiment may be connected zigzag in series.

For example, a first battery cell in the second row and a first battery cell in the first row may be connected by the third conductor 153c.

And the first battery cell in the first row (which is a first battery cell from the left side among the battery cells in the first row) and a second battery cell in the first row may be connected by the second conductor 153b. The second battery cell in the first row and a second battery cell in the second row may be connected by the third conductor 153c. Also, the second battery cell in the second row and a third battery cell in the second row may be connected by the second conductor 153b.

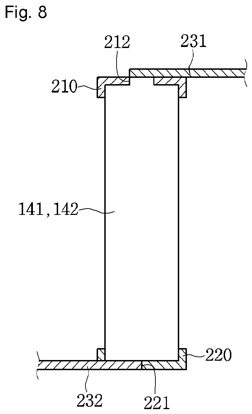

FIG. 8 is a view illustrating a cell cap which covers both ends of a battery cell according to a third embodiment.

The embodiment is the same as the first embodiment or the second embodiment, except that the battery cell is protected by a cell cap. Therefore, hereinafter, only characteristic parts of the embodiment will be described.

Referring to FIG. 8, a battery assembly of the embodiment may include cell caps 210 and 220 which cover both poles of each of the battery cells 141 and 142. The cell caps 210 and 220 may include a first cell cap 210 which covers the positive poles of the battery cells 141 and 142, and a second cell cap 220 which covers the negative poles of the battery cells 141 and 142.

For example, the positive pole of one cell of the battery cells 141 and 142 may be connected to a first conductor 231, and the negative pole thereof may be connected to a second conductor 232.

The first conductor 231 may be in contact with the positive pole passed through a hole 212 of the first cell cap 210. At this point, the first conductor 231 may cover the entire positive pole while being in contact with the positive pole, and thus may prevent the positive pole from being exposed to an outside.

The second conductor 232 may be inserted into an accommodation groove 221 of the second cell cap 220, and may be connected to the negative poles of the battery cells 141 and 142.

The second conductor 232 may be fitted to the second cell cap 220, or may be integrally formed with the second cell cap 220 through inserting injection molding.

According to the embodiment, since both ends of the battery cells 141 and 142 are surrounded by the cell caps 210 and 220, foreign substances or moisture may be prevented from being introduced to both poles of the battery cells 141 and 142.

Of course, in the embodiment, the first conductor 231 connected to the positive pole of one battery cell is connected to the negative pole of another battery cell.

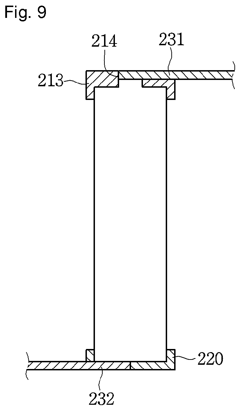

FIG. 9 is a view illustrating a cell cap which covers both ends of a battery cell according to a fourth embodiment.

The embodiment is the same as the third embodiment, except a coupling structure between the first cell cap and the conductor. Therefore, hereinafter, only characteristic parts of the embodiment will be described.

Referring to FIG. 9, the first conductor 231 may be inserted into an accommodation groove 214 of a first cell cap 213 which covers the positive poles of the battery cells 141 and 142 of the embodiment. And the first conductor 231 may be connected to the positive poles of the battery cells 141 and 142 while being inserted into the accommodation groove 214.

The first conductor 231 may be fitted to the first cell cap 213, or may be integrally formed with the first cell cap 213 through the inserting injection molding.

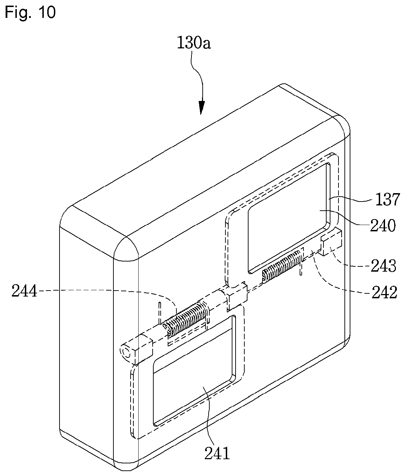

FIG. 10 is a view illustrating a part of an outer case of a battery assembly according to a fifth embodiment.

The embodiment is the same as one of the first to fourth embodiments, except a structure of the outer case. Therefore, hereinafter, only characteristic parts of the embodiment will be described.

Referring to FIG. 10, an outer case 130a of the embodiment may include one or more heat radiation holes 137, and one or more opening and closing members 240 and 241 which open and close the one or more heat radiation holes 137.

The one or more opening and closing members 240 and 241 may maintain a closed state of the one or more heat radiation holes 137, as long as an external force is not applied thereto from an outside.

The one or more opening and closing members 240 and 241 may open and close the one or more heat radiation holes 137 by a rotating motion. For the rotating motion of the one or more opening and closing members 240 and 241, the one or more opening and closing members 240 and 241 may include a hinge shaft 242, and the outer case 130a may include a shaft coupling part 243 to which the hinge shaft 242 is coupled.

The one or more opening and closing members 240 and 241 may be elastically supported by an elastic member 244. For example, a force by which the one or more opening and closing members 240 and 241 are rotated in a direction that closes the one or more heat radiation hole 137 may be applied to the one or more opening and closing members 240 and 241 by the elastic member 244.

According to the embodiment, since the one or more opening and closing members 240 and 241 closes the one or more heat radiation holes 137, as long as the external force is not applied thereto from the outside, foreign substances may be prevented from being introduced into the outer case 130a through the one or more heat radiation holes 137 during a process in which the battery assembly 120 is transported before being installed at the cleaner body 10 or a process in which the battery assembly 120 is replaced.

Although not illustrated, in the process in which the battery assembly 120 is installed at the cleaner body 10, the one or more opening and closing members 240 and 241 may be operated by a pressing part provided inside the cleaner body 10, and may open the one or more heat radiation holes 137.

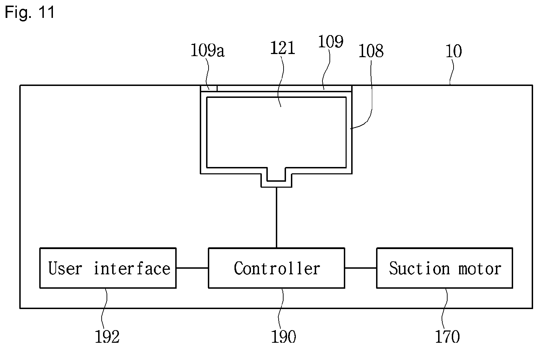

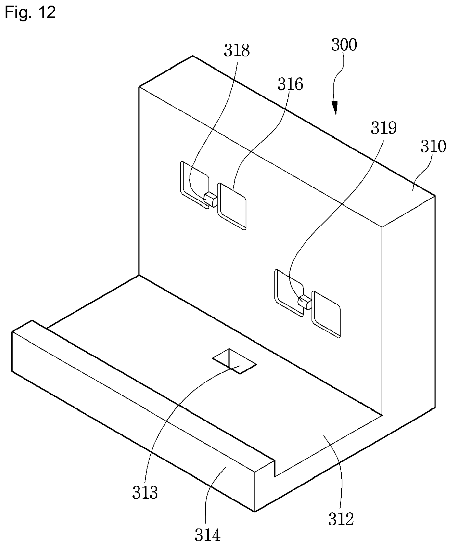

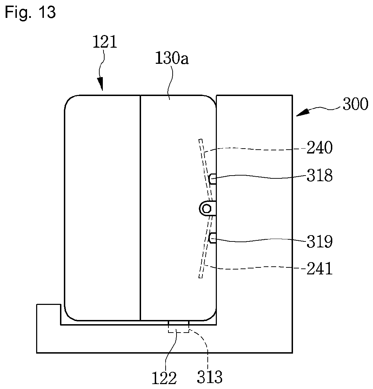

FIG. 11 is a block diagram of a vacuum cleaner according to a sixth embodiment, FIG. 12 is a view illustrating a charging stand for charging a battery assembly according to the sixth embodiment, and FIG. 13 is a view illustrating a state in which the battery assembly is connected to the charging stand of FIG. 12.

The embodiment is the same as one of the previous embodiments, except that the battery assembly is separably coupled to the cleaner body, and is charged by a charging stand. Therefore, hereinafter, only characteristic parts of the embodiment will be described.

Referring to FIG. 11, the cleaner body 10 of the embodiment may include a battery installation part 108 at which a battery assembly 121 is separably installed.

Also, the cleaner body 10 may further include the suction motor 170 and the user interface 192.

The battery installation part 108 may be exposed to an outside of the cleaner body 10, or may be opened and closed by a cover 109. When the battery installation part 108 is opened and closed by the cover 109, the user may open the cover 109, and then may install the battery assembly 121 at the battery installation part 108 or may separate the battery assembly 121 from the battery installation part 108.

That is, the battery assembly 121 may be installed at or separated from the battery installation part 108 without disassembling of the cleaner body 10.

While the battery assembly 121 is installed at the battery installation part 108, at least a part of an outer case of the battery assembly 121 may be spaced apart from the battery installation part 108.

A space between the battery installation part 108 and the battery assembly 121 may serve as a heat radiation path.

When the cover 109 covers the battery installation part 108, the cover 109 may include one or more heat radiation holes 109a.

When the battery assembly 121 is separably installed at the cleaner body 10, the battery assembly 121 may be connected to a charging stand 300 to be charged, while being separated from the cleaner body 10.

In this case, the charger 180 provided at the cleaner body 10 may be omitted. Of course, even though the battery assembly 121 may be charged by the charging stand 300, the charger 180 may also be provided at the cleaner body 10. In this case, the battery assembly 121 may be charged while being not separated from the cleaner body 10.

That is, the battery assembly 121 may be charged while being installed at the cleaner body 10, and may also be charged by the charging stand 300 while being separated from the cleaner body 10.

In the embodiment, the outer case 130a of the battery assembly 121 may include the one or more opening and closing members 240 and 241 illustrated in FIG. 10. And the one or more opening and closing members 240 and 241 may be operated by a pressing part provided at the battery installation part 108 while being installed at the battery installation part 108.

The charging stand 300 may include a charging stand body 310. The charging stand body 310 may include a supporting part 312 which supports the battery assembly 120.

The supporting part 312 may include a movement preventing part 314 which prevents movement of the battery assembly 121.

The supporting part 312 may further include a terminal connection part 313 which is connected to a terminal 122 of the battery assembly 121.

As another embodiment, the supporting part 312 may be omitted from the charging stand body 310. In this case, each of the charging stand body 310 and the battery assembly 121 may be put on a supporting surface (e.g., a floor surface). Of course, even in this case, the charging stand body 310 may include the movement preventing part 314 which prevents the location movement of the battery assembly 121, and the terminal connection part 313.

The charging stand body 310 may include pressing parts 318 and 319 which operate the one or more opening and closing members 240 and 241 of the battery assembly 121.

Also, the charging stand body 310 may include one or more heat radiation openings 316 which is in communication with one or more heat radiation holes opened by the one or more opening and closing members 240 and 241.

Therefore, while the battery assembly 121 is charged, the heat discharged from the battery assembly 121 may be introduced into the charging stand 300, and then may be discharged to an outside of the charging stand 300.

Therefore, according to the embodiment, heat radiation may be smoothly performed while the battery assembly 121 is charged.

Until now, an example in which the cleaner is a canister type cleaner has been described. However, the present disclosure may also be applied to an upright type cleaner. At this point, the battery which supplies the power to the suction motor may be provided at the suction part or the cleaner body. And the above-described charger may also be provided at the suction part or the cleaner body. And the charging connector may be connected to the suction part or the cleaner body.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. A battery assembly (120) comprising:
a plurality of battery cells (141, 142) and
a battery cover (150) configured to support the plurality of battery cells (141, 142), wherein the battery cover (150) comprises a plurality of partition walls (151b, 151d), and each partition wall (151b) of the plurality of partition walls (151b, 151d) forms a cell chamber (151a) arranged to accommodate a battery cell (141) of the plurality of battery cells (141, 142), respectively, and the partition walls (151b, 151d) are at least partially spaced apart from each other;
wherein the plurality of partition walls (151b, 151d) enable the plurality of battery cells (141, 142) to be arranged in a plurality of rows;
wherein the plurality of partition walls (151b, 151d) comprises a plurality of first partition walls (151b) arranged to accommodate battery cells (141) in a first row, and a plurality of second partition walls (151d) arranged to accommodate battery cells (142) in a second row; wherein one or more of the plurality of first partition walls (151b) are spaced apart from one or more of the plurality of second partition walls (151d) by a first air chamber (152) therebetween; and
wherein the battery cover (150) comprises a plurality of first heat radiation holes (159) arranged to discharge heat from cell chambers (151a), and one or more second heat radiation holes (159a) arranged to discharge heat from the first air chamber (152).

2. The battery assembly according to claim 1, wherein the plurality of first partition walls (151b) are at least partially spaced apart from each other by a second air chamber (152a), and/or
the plurality of second partition walls (151d) are at least partially spaced apart from each other by the second air chamber (152a).

3. The battery assembly according to claim 1 or 2, further comprising a first conductor (153a, 153b) arranged to electrically connect two battery cells in the same row among the plurality of rows, and a second conductor (153c) arranged to electrically connect a battery cell with a battery cell in an adjacent row among the plurality of rows.

4. The battery assembly according to claims 1, 2 or 3, further comprising a conductor (231, 232) arranged to connect the plurality of battery cells (141, 142), and a cell cap (210, 220) arranged to cover one or more poles of each of the plurality of battery cells (141, 142),
wherein the conductor (231, 232) is in contact with one or more poles which pass through the cell cap (210, 220).

5. The battery assembly according to any of claims 1-4, further comprising a conductor arranged to connect the plurality of battery cells (141, 142), and a cell cap (213, 220) arranged to cover one or more poles of each of the plurality of battery cells (141, 142),
wherein the conductor (231, 232) is arranged to be inserted into the cell cap (213, 220) whilst in contact with one or more poles.

6. The battery assembly according to any preceding claim, further comprising a battery management unit (160) arranged to manage a voltage of each of the plurality of battery cells (141, 142), and an outer case (130, 130a) arranged to accommodate the battery management unit (160) and the battery cover (150).

7. The battery assembly according to claim 6, wherein the outer case (130, 130a) comprises a partition plate (133) which divides a first space (133a) accommodating the battery cover (150) from a second space (133b) accommodating the battery management unit (160).

8. The battery assembly according to claim 6 or 7, wherein at least a part of an internal surface of the outer case (130, 130a) and the battery cover (150) are spaced apart from each other to form a heat radiation path between the internal surface of the outer case (130, 130a) and the battery cover (150).

9. The battery assembly according to any of claims 6, 7 or 8, wherein the outer case (130, 130a) comprises a heat radiation hole (137) arranged to discharge internal heat of the outer case (130, 130a) to an outside of the battery assembly.

10. The battery assembly according to claim 9, wherein the outer case (130a) further comprises an opening and closing member (240, 241) arranged to open and close the heat radiation hole (137), and an elastic member (244) arranged to provide an elastic force to the opening and closing member (240, 241) in a direction that the opening and closing member (240, 241) closes the heat radiation hole (137).

11. A vacuum cleaner comprising a battery assembly of any preceding claim.

## Patentansprüche

1. Batterieanordnung (120), die Folgendes umfasst:
eine Vielzahl an Batteriezellen (141, 142) und eine Batterieabdeckung (150), die ausgelegt ist, um die Vielzahl an Batteriezellen zu stützen (141, 142), wobei die Batterieabdeckung (150) eine Vielzahl an Trennwänden (151b, 151d) umfasst und jede Trennwand (151b) der Vielzahl an Trennwänden (151b, 151d) eine Zellenkammer (151a) bildet, die angeordnet ist, um jeweils eine Batteriezelle (141) der Vielzahl an Batteriezellen (141, 142) unterzubringen, und die Trennwände (151b, 151d) wenigstens teilweise voneinander beabstandet sind;
wobei die Vielzahl an Trennwänden (151b, 151d) der Vielzahl an Batteriezellen (141, 142) ermöglichen, in einer Vielzahl an Reihen angeordnet zu sein;
wobei die Vielzahl an Trennwänden (151b, 151d) eine Vielzahl an ersten Trennwänden (151b), die angeordnet sind, um Batteriezellen (141) in einer ersten Reihe unterzubringen, und eine Vielzahl an zweiten Trennwänden (151d), die angeordnet sind, um Batteriezellen (142) in einer zweiten Reihe anzuordnen, umfasst;
wobei eine oder mehrere der Vielzahl an ersten Trennwänden (151b) von einer oder mehreren der Vielzahl an zweiten Trennwänden (151d) durch eine dazwischenliegende erste Luftkammer (152) beabstandet sind; und
wobei die Batterieabdeckung (150) eine Vielzahl an ersten Wärmeabstrahlungsöffnungen (159), die angeordnet sind, um Wärme aus Zellenkammern (151a) abzuleiten, und ein oder mehrere zweite Wärmeabstrahlungsöffnung/en (159a), die angeordnet sind, um Wärme aus der ersten Luftkammer (152) abzuleiten, umfasst.

2. Batterieanordnung nach Anspruch 1, wobei die Vielzahl an ersten Trennwänden (151b) wenigstens teilweise voneinander durch eine zweite Luftkammer (152a) beabstandet sind, und/oder
die Vielzahl an zweiten Trennwänden (151d) wenigstens teilweise von einander durch die zweite Luftkammer (152a) beabstandet sind.

3. Batterieanordnung nach Anspruch 1 oder 2, die weiterhin einen ersten Leiter (153a, 153b), der angeordnet ist, um zwei Batteriezellen in derselben Reihe innerhalb der Vielzahl an Reihen elektrisch zu verbinden, und einen zweiten Leiter (153c), der angeordnet ist, um eine Batteriezelle mit einer Batteriezelle in einer angrenzenden Reihe innerhalb der Vielzahl an Reihen zu verbinden, umfasst.

4. Batterieanordnung nach Ansprüchen 1, 2 oder 3, die weiterhin einen Leiter (231, 232), der angeordnet ist, um die Vielzahl an Batteriezellen (141, 142) zu verbinden, und eine Zellenkappe (210, 220), die angeordnet ist, um einen oder mehrere Pole jeder der Vielzahl an Batteriezellen (141, 142) abzudecken, umfasst,
wobei der Leiter (231, 232) mit einem oder mehreren Polen, die durch die Zellenkappe (210, 220) verlaufen, in Kontakt steht.

5. Batterieanordnung nach einem beliebigen der Ansprüche 1-4, die weiterhin einen Leiter, der angeordnet ist, um die Vielzahl an Batteriezellen (141, 142) zu verbinden, und eine Zellenkappe (213, 220), die angeordnet ist, um einen oder mehrere Pole jeder der Vielzahl an Batteriezellen (141, 142) abzudecken, umfasst,
wobei der Leiter (231, 232) angeordnet ist, um in die Zellenkappe (213, 220) eingeführt zu sein, während er mit einem oder mehreren Polen in Kontakt steht.

6. Batterieanordnung nach einem beliebigen der vorstehenden Ansprüche, die weiterhin eine Batterieverwaltungseinheit (160), die angeordnet ist, um eine Spannung jeder der Vielzahl an Batteriezellen (141, 142) zu verwalten, und ein Außengehäuse (130, 130a), das angeordnet ist, um die Batterieverwaltungseinheit (160) und die Batterieabdeckung (150) unterzubringen, umfasst.

7. Batterieanordnung nach Anspruch 6, wobei das Außengehäuse (130, 130a) eine Trennplatte (133) umfasst, die einen ersten Zwischenraum (133a), der die Batterieabdeckung (150) unterbringt, von einem zweiten Zwischenraum (133b), der die Batterieverwaltungseinheit (160) unterbringt, teilt.

8. Batterieanordnung nach Anspruch 6 oder 7, wobei wenigstens ein Teil einer Innenfläche des Außengehäuses (130, 130a) und die Batterieabdeckung (150) voneinander beabstandet sind, um einen Wärmestrahlungsweg zwischen der Innenfläche des Außengehäuses (130, 130a) und der Batterieabdeckung (150) zu bilden.

9. Batterieanordnung nach einem beliebigen der Ansprüche 6, 7 oder 8, wobei das Außengehäuse (130, 130a) eine Wärmeabstrahlungsöffnung (137) umfasst, die angeordnet ist, um Innenwärme des Außengehäuses (130, 130a) zu einer Außenumgebung der Batterieanordnung auszuleiten.

10. Batterieanordnung nach Anspruch 9, wobei das Außengehäuse (130a) weiterhin ein Öffnungs- und Schließelement (240, 241), das angeordnet ist, um die Wärmeabstrahlungsöffnung (137) zu öffnen und zu schließen, und ein elastisches Element (244), das angeordnet ist, um dem Öffnungs- und Schließelement (240, 241) in einer Richtung, in der das Öffnungs- und Schließelement (240, 241) die Wärmeabstrahlungsöffnung (137) verschließt, eine Spannkraft bereitzustellen, umfasst.

11. Staubsauger, der eine Batterieanordnung nach einem beliebigen der vorstehenden Ansprüche umfasst.

## Revendications

1. Ensemble formant batterie (120) comprenant :
une pluralité d'éléments de batterie (141, 142) et une enveloppe de batterie (150) configurée pour supporter la pluralité d'éléments de batterie (141, 142), l'enveloppe de batterie (150) comprenant une pluralité de parois de séparation (151b, 151d), et chaque paroi de séparation (151b) de la pluralité de parois de séparation (151b, 151d) formant un compartiment d'élément (151a) conçu pour contenir respectivement un élément de batterie (141) de la pluralité d'éléments de batterie (141, 142), et les parois de séparation (151b, 151d) étant au moins partiellement espacées les unes des autres ;
dans lequel la pluralité de parois de séparation (151b, 151d) permettent à la pluralité d'éléments de batterie (141, 142) d'être disposés en une pluralité de rangées ;
dans lequel la pluralité de parois de séparation (151b, 151d) comprennent une pluralité de premières parois de séparation (151b) conçues pour contenir des éléments de batterie (141) en une première rangée, et une pluralité de secondes parois de séparation (151d) conçues pour contenir des éléments de batterie (142) en une seconde rangée ;
dans lequel une ou plusieurs parois parmi la pluralité de premières parois de séparation (151b) sont espacées vis-à-vis d'une ou de plusieurs parois parmi la pluralité de secondes parois de séparation (151d) par un premier compartiment d'air (152) entre celles-ci ; et
dans lequel l'enveloppe de batterie (150) comprend une pluralité de premiers trous de rayonnement de chaleur (159) conçus pour évacuer de la chaleur depuis les compartiments d'éléments (151a), et un ou plusieurs seconds trous de rayonnement de chaleur (159a) conçus pour évacuer de la chaleur depuis le premier compartiment d'air (152).

2. Ensemble formant batterie selon la revendication 1, dans lequel la pluralité de premières parois de séparation (151b) sont au moins partiellement espacées les unes des autres par un second compartiment d'air (152a), et/ou
la pluralité de secondes parois de séparation (151d) sont au moins partiellement espacées les unes des autres par le second compartiment d'air (152a).

3. Ensemble formant batterie selon la revendication 1 ou 2, comprenant en outre un premier conducteur (153a, 153b) conçu pour relier sur le plan électrique deux éléments de batterie dans la même rangée parmi la pluralité de rangées, et un second conducteur (153c) conçu pour relier sur le plan électrique un élément de batterie avec un élément de batterie dans une rangée adjacente parmi la pluralité de rangées.

4. Ensemble formant batterie selon la revendication 1, 2 ou 3, comprenant en outre un conducteur (231, 232) conçu pour relier la pluralité d'éléments de batterie (141, 142), et un couvercle d'éléments (210, 220) conçu pour recouvrir un ou plusieurs pôles de chaque élément de la pluralité d'éléments de batterie (141, 142),
dans lequel le conducteur (231, 232) est en contact avec un ou plusieurs pôles qui passent à travers le couvercle d'éléments (210, 220).

5. Ensemble formant batterie selon l'une quelconque des revendications 1 à 4, comprenant en outre un conducteur conçu pour relier la pluralité d'éléments de batterie (141, 142), et un couvercle d'éléments (213, 220) conçu pour recouvrir un ou plusieurs pôles de chaque élément de la pluralité d'éléments de batterie (141, 142),
dans lequel le conducteur (231, 232) est conçu pour être inséré dans le couvercle d'éléments (213, 220) tandis qu'il est en contact avec le ou les pôles.

6. Ensemble formant batterie selon l'une quelconque des revendications précédentes, comprenant en outre une unité de gestion de batterie (160) conçue pour gérer une tension de chaque élément de la pluralité d'éléments de batterie (141, 142), et un carter extérieur (130, 130a) conçu pour contenir l'unité de gestion de batterie (160) et l'enveloppe de batterie (150).

7. Ensemble formant batterie selon la revendication 6, dans lequel le carter extérieur (130, 130a) comprend une plaque de séparation (133) séparant un premier espace (133a) contenant l'enveloppe de batterie (150) d'un second espace (133b) contenant l'unité de gestion de batterie (160).

8. Ensemble formant batterie selon la revendication 6 ou 7, dans lequel au moins une partie d'une surface intérieure du carter extérieur (130, 130a) et de l'enveloppe de batterie (150) sont espacées l'une de l'autre de façon à former un trajet de rayonnement de chaleur entre la surface intérieure du carter extérieur (130, 130a) et l'enveloppe de batterie (150).

9. Ensemble formant batterie selon l'une quelconque des revendications 6, 7 et 8, dans lequel le carter extérieur (130, 130a) comprend un trou de rayonnement de chaleur (137) conçu pour évacuer de la chaleur intérieure du carter extérieur (130, 130a) vers l'extérieur de l'ensemble formant batterie.

10. Ensemble formant batterie selon la revendication 9, dans lequel le carter extérieur (130a) comprend en outre un élément d'ouverture et de fermeture (240, 241) conçu pour ouvrir et fermer le trou de rayonnement de chaleur (137), et un élément élastique (244) conçu pour imprimer une force élastique à l'élément d'ouverture et de fermeture (240, 241) dans une direction dans laquelle l'élément d'ouverture et de fermeture (240, 241) ferme le trou de rayonnement de chaleur (137).

11. Aspirateur comprenant un ensemble formant batterie selon l'une quelconque des revendications précédentes.
